# DEMANDE DE BREVET EUROPEEN

(11) **EP 0 948 173 A1**
(43) Date de publication de la demande: **06.10.1999**
(21) Numéro de dépôt: 99400797.9
(22) Date de dépôt: 01.04.1999
(51) Int. Cl.: H04L 27/20, H04L 5/06

(54) **Modulateur pour plusieurs signaux de modulation**

(30) Priorité: 02.04.1998 FR 9804104
(71) Demandeur: ALCATEL, 75008 Paris (FR)
(72) Inventeur: Dartois, Luc, 78955 Carrieres Sous Poissy (FR)
(74) Mandataire: El Manouni, Josiane

(57) **Abrégé**

On prévoit de remplacer tous les traitements à l'intérieur d'un modulateur par une table précalculée qui délivre, par une simple lecture, un signal modulé en fonction d'un signal modulant. La fréquence de porteuse du modulateur est même programmable. On montre qu'on réduit la taille de la table précalculée en réalisant un automate. Avec l'automate, l'adresse de lecture de la table, à un moment donné, dépend de valeurs précédentes du signal modulant. Par une lecture de la table en temps partagé, on peut même, avec un seul modulateur, effectuer le travail de plusieurs modulateurs. On réalise alors facilement un modulateur multiporteuses.

## Description

La présente invention concerne le domaine de la téléphonie avec des mobiles. Dans ce domaine, elle a pour objet un modulateur multiporteuses large bande, utilisable autant dans une station de base que dans un poste de téléphonie mobile. Dans ce dernier cas, bien que le modulateur ne soit pas normalement multiporteuses, il utilisera avantageusement la technique mise au point pour la station de base. L'invention permet ainsi dans le cadre de la téléphonie mobile de raccorder un nombre relativement important de téléphones mobiles avec une même station de base. D'une manière générale, l'invention est intéressante lorsque plusieurs circuits de modulation doivent permettre de moduler plusieurs porteuses simultanément. L'invention a également pour objet la programmation de ce modulateur multiporteuses.

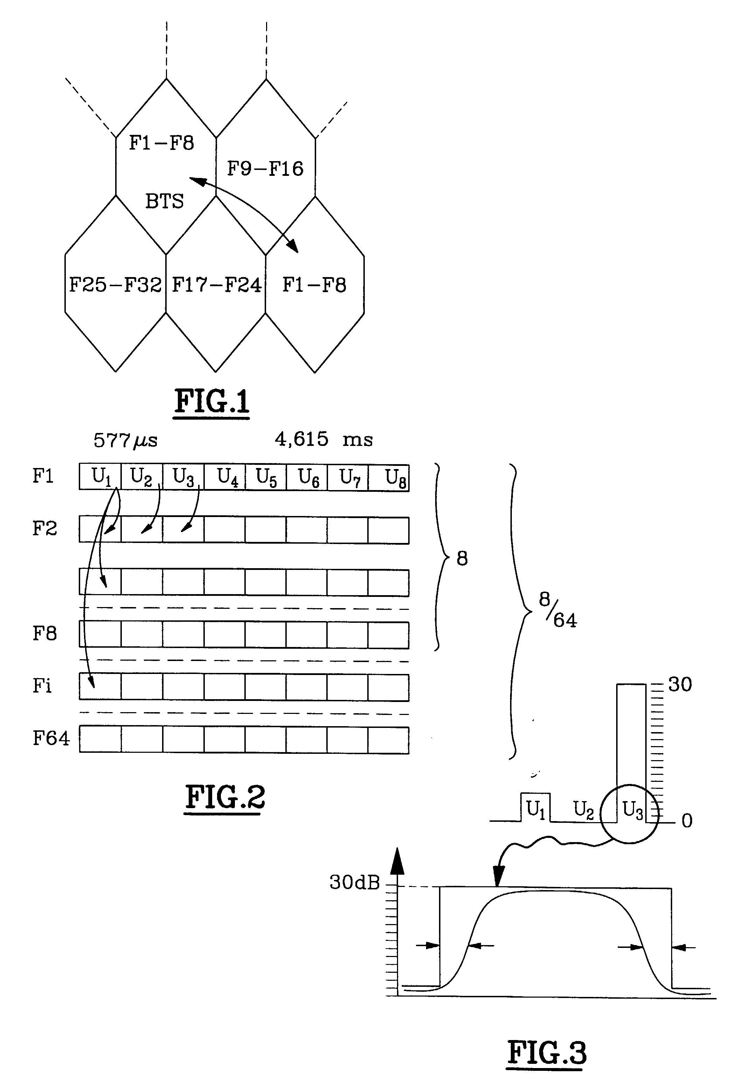

L'invention sera décrite dans le cadre d'une application de type GSM mais elle n'est toutefois pas limitée à ce mode d'utilisation. D'autres protocoles sont en effet également envisageables. Le mode GSM est choisi car il est suffisamment complet et représentatif des problèmes résolus par l'invention. Les figures 1 à 5 montrent les particularités d'utilisation d'une station de base dans un réseau de type GSM. On en déduira les contraintes d'utilisation des téléphones mobiles eux-mêmes.

Sur la figure 1, on a représenté des domaines qui sont des domaines géographiques. Ces domaines correspondent par exemple à un quartier à l'intérieur d'une ville, à un enchevêtrement de rues. Le contour des domaines n'est pas nécessairement aussi précis que les hexagones qui sont montrés. Le contour des domaines correspond en réalité à une limite physique au-delà de laquelle des signaux émis à des fréquences données à partir de stations de base situées à l'intérieur du domaine, ne sont plus perçus. Ainsi, une station de base BTS dans un premier domaine pourrait émettre des signaux sur des porteuses notées F1 à F8. Dans des domaines voisins, d'autres stations de base émettront sur des porteuses F9 à F16, ou F17 à F24, ou F25 à F32 et ainsi de suite. Un autre domaine, adjacent aux domaines qui étaient déjà adjacents au premier domaine, pourra lui aussi utiliser les fréquences F1 à F8 du premier domaine pour diffuser les messages aux téléphones mobiles qui s'y trouvent. En agissant ainsi, il y a peu de risques de voir se mélanger les signaux.

Sur la figure 2, on a représenté pour une fréquence, la fréquence F1, une utilisation d'une trame temporelle (de 4,615 millisecondes) par huit utilisateurs. Cette trame se répartit en huit fenêtres temporelles. Les utilisateurs utilisent, chacun leur tour, la fréquence F1 pour transmettre leur signal. Les fenêtres temporelles ont une durée limitée à 577 microsecondes. Pour une autre fréquence F2, on peut aussi diffuser des messages relatifs à huit autres utilisateurs et ainsi de suite jusqu'à la fréquence F8. Ce qui fait que dans un domaine, en pratique, on peut relier en même temps 64 (8 x 8) utilisateurs en même temps à une même station de base. La répartition temporelle des fenêtres dans la trame est dite une répartition TDMA : "time division multiple access".

Pour éviter les problèmes liés à une mauvaise qualité de propagation du signal émis par une station de base en direction d'un mobile sur une porteuse donnée (par exemple F1), on prévoit par ailleurs qu'au bout de chaque trame de 4,615 millisecondes les fréquences des porteuses soient commutées. De cette manière, les utilisateurs qui utilisaient la fréquence F1 préalablement, utilisent par la suite une autre fréquence F2. Par permutation circulaire, ceux qui utilisaient la fréquence F2, utilisent la fréquence F3 et ainsi de suite.

Pour résoudre des problèmes d'interférence qui pourraient néanmoins survenir entre deux domaines qui ne sont pas voisins, comme ceux qui sont reliés par la flèche sur la figure 1, on a préféré retenir huit fréquences parmi 64 pour un domaine. A une trame suivante, huit autres fréquences parmi les 64 seront retenues. Ces huit autres fréquences ne seront pas nécessairement les mêmes que les fréquences de la trame précédente. Le principe reste sensiblement le même. Mais l'immunité vis à vis des mélanges de signaux augmente.

La figure 3 montre, en fonction de l'utilisation, ce que peut être l'amplitude des signaux émis dans chacune des bandes de même que dans chaque fenêtre temporelle. Ainsi, pour un utilisateur U1, il y a un niveau de signal de modulation, alors que pour un utilisateur U2, qui se tait, il n'y a rien d'émis. En outre, un utilisateur U3 se trouve éloigné de la station de base. La station de base a reconnu, au cours d'une fenêtre d'initialisation, que le niveau qu'elle recevait de cet utilisateur U3 était faible. Elle émet alors à un niveau plus élevé en direction de cet utilisateur de façon à ce que celui-ci puisse recevoir correctement les messages qui lui sont adressés. De même celui-ci émet par la suite un signal dont le niveau est en correspondance des effets de son éloignement de la station de base. En pratique, sur une dynamique de 30 dB, on retient des pas de un ou deux dB ce qui fait que le niveau est quantifié sur 15 ou 30 valeurs.

Par ailleurs, autant il n'y a aucun signal à destination de l'utilisateur U2, autant il y a un signal à destination de l'utilisateur U3. Cependant, passant de la fenêtre temporelle de l'utilisateur U2 à celle de l'utilisateur U3, il n'est pas envisageable de faire croître le niveau d'émission trop brutalement. En effet, une croissance trop brutale s'analyse, en termes spectraux, comme la présence de hautes fréquence parasites. Aussi, dans le but d'amortir des effets de distorsions que cette situation présente, on fera croître le signal de l'utilisateur U3 selon une enveloppe ayant sensiblement une forme de cloche comme représenté. Celle-ci a pour effet de neutraliser des périodes d'émissions au début de la fenêtre et à la fin de la fenêtre. En pratique, ce n'est pas gênant, parce qu'on en profite pour mettre dans ces périodes des bits de synchronisation, en tout cas des bits sans signification de message.

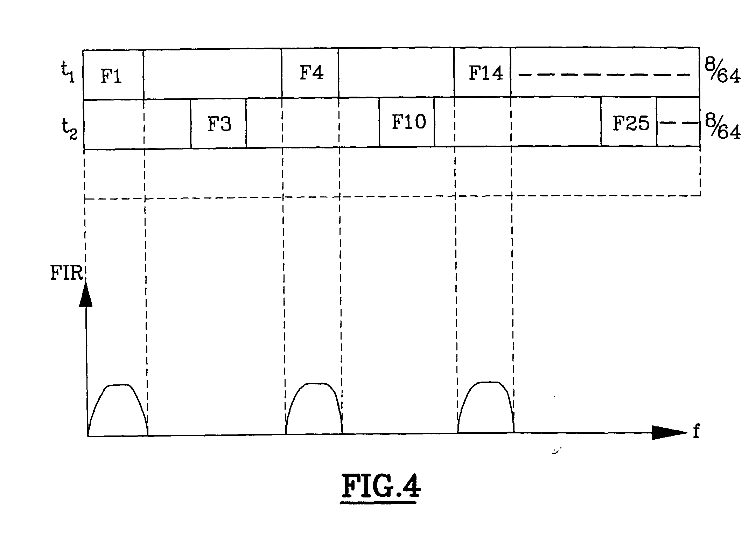

La figure 4 montre une autre contrainte d'utilisation des modulateurs mis en oeuvre dans les stations de base. Par exemple, pendant une première trame t1, des fréquences F1, F4, F14, etc.... sont utilisées. En pratique, les bandes passantes de chaque fréquence sont de 200 KHz. La norme GSM impose en conséquence, que ce qui se passe dans une bande ne puisse pas avoir des effets dans une bande adjacente (à une fréquence proche) au-dessus d'un niveau donné. En pratique, la norme impose qu'au-delà de 600 Khz, donc ici dans la bande F4, l'atténuation apportée au signal émis dans la bande F1 doit être au moins de 60 dB. Le bas de la figure 4 montre le spectre d'un filtre auquel il faut aboutir, pour un dessin de fréquence donné correspondant à un choix de huit fréquences parmi les 64 au moment d'une trame t1 donnée.

Le problème principal concerné par l'invention, est la transmission multiporteuses large bande. Notamment, avec l'invention on veut engendrer une multiplicité de porteuses, modulées (F1, F4, F14...) avec une haute pureté spectrale dans une bande de fréquence donnée, pour alimenter un modulateur d'émission final et un amplificateur. Evidemment, le problème est particulièrement sensible si le domaine géographique subit un fort trafic : s'il y a effectivement 64 postes téléphoniques mobiles en conversation dans le domaine à un moment donné.

Dans les stations de base utilisées aujourd'hui, une technique de filtrage à bande étroite est utilisée pour produire des signaux indépendants sur chaque porteuse. Chaque signal est ainsi modulé, filtré et transposé d'une manière analogique avant une amplification individuelle et une combinaison avant émission. Dans quelques cas, il est connu de combiner des signaux faibles avant une amplification globale de puissance à large bande.

Le problème à résoudre est de trouver une méthode et une architecture pour un modulateur multiporteuses à bas coût recevant en entrée les différents signaux de modulation (les signaux de parole) et produisant en sortie un signal analytique, représentant, en bande de base ou à fréquence intermédiaire, la somme des porteuses modulées. Dans cette somme, chaque porteuse doit être présente avec la pureté spectrale requise par les contraintes de l'interface d'émission. En effet, un filtrage analogique à posteriori de chaque canal n'est pas possible dans une chaîne d'émission radioélectrique à large bande. Pour satisfaire aussi les applications dans lesquelles on a une réutilisation de la même fréquence, le modulateur multiporteuses doit être capable de recevoir plusieurs signaux de modulation à superposer sur la même porteuse et à commander celle-ci en phase et en amplitude en conséquence.

Les problèmes classiques rencontrés dans les méthodes de type numérique sont le nombre d'opérations effectuées, spécialement des opérations de type multiplication accumulation (MAC) sur des nombres analytiques (des nombres complexes). Le problème rencontré avec une porteuse devient évidemment encore plus grand s'il y en a plusieurs. Par exemple, dans l'invention, on voudra traiter simultanément 64 porteuses dans une bande de 25 MHz avec un taux d'échantillonnage autour de 100 MHz.

Un moyen connu de réduire ces calculs numériques MAC est de transformer une partie de ces opérations en des tabulations. Dans ce cas, des tables doivent être synthétisées sur la base de contraintes de modulation et de filtrage. Ceci n'est pas évident à réaliser manuellement ou même avec des moyens de calculs classiques du fait de la taille des tables et de la charge de codage que cela implique. En outre, ceci est loin d'être réalisable indépendamment du schéma de modulation ou des contraintes de filtrage.

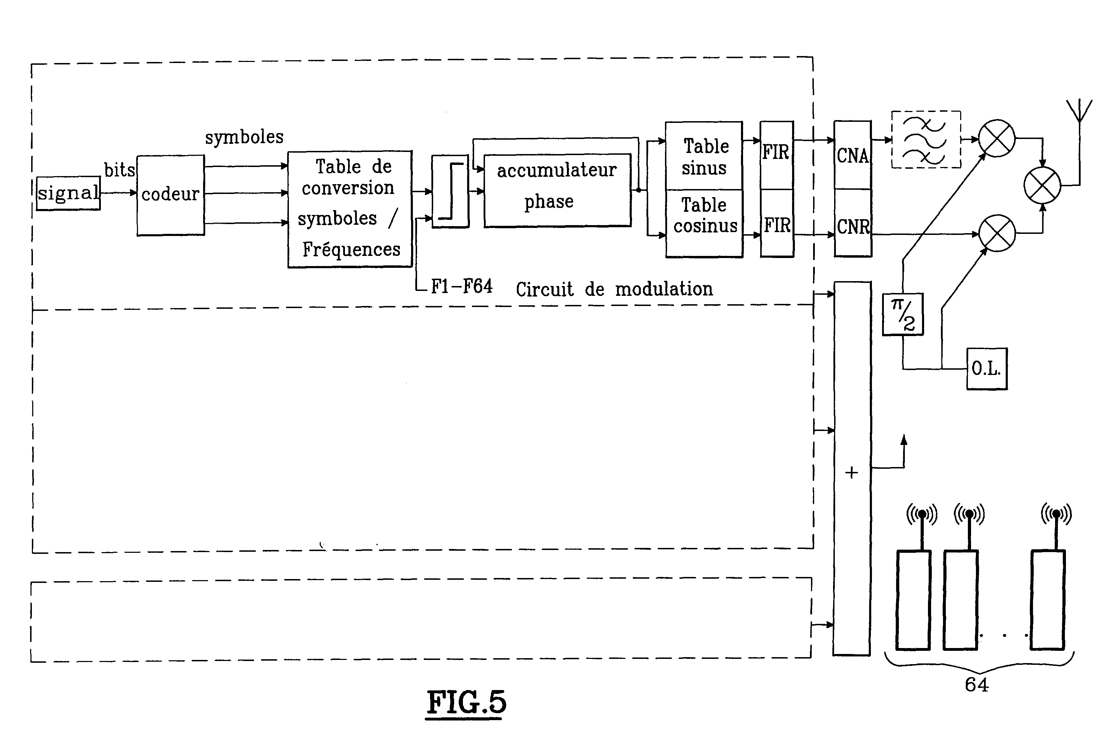

La figure 5 montre en résumé, ce qui se fait de mieux actuellement dans le domaine des modulateurs multiporteuses. Un signal, ayant préalablement subi des codages de compression, de redondance, de canal ou autres est disponible sous une forme numérique. Il va être synthétisé spectralement. Un codeur reçoit les bits du signal et, en fonction de bits précédents du même signal (dans un exemple simplifié, on prendra 2 temps bits précédents), produit des signaux codés, des symboles, résultant d'une linéarisation de la modulation sur une période de temps de 3 bits. Dans un exemple selon la norme GSM, les bits de signal sont délivrés à une fréquence de 13/48 MHz (égal sensiblement à 270 KHz). Le codeur délivre les symboles à ce même rythme. Une table de conversion délivre ensuite des échantillons de fréquence instantanée correspondant aux symboles produits par le codeur.

Un accumulateur de phases connecté à la table de conversion, reçoit ainsi un signal proportionnel à la fréquence. L'accumulateur additionne un échantillon reçu à son contenu, et réinjecte le tout à son entrée. L'accumulateur produit donc une phase instantanée. Plutôt que de ne disposer à la sortie de l'accumulateur de phases, d'une phase instantanée qu'au rythme de la production des bits du signal, on préfère suréchantillonner la sortie de l'accumulateur de phase en le faisant travailler à une vitesse notablement plus vite, par exemple de 8 à 32 fois sa vitesse. Dans un exemple, le taux de suréchantillonnage sera de 16. Ce qui signifie que la table de conversion des symboles en valeur de fréquence et l'accumulateur de phases sont sollicités à un rythme de 16x13/48=13/3 MHz par exemple. La valeur de fréquence instantanée est normalisée pour correspondre à un écart de phase qui se produirait pendant une période de suréchantillonnage.

Bénéficiant ainsi d'une phase instantanée, il est possible, au moyen de tables de transformation sinus et cosinus, de produire des signaux correspondant aux amplitudes instantanées d'un signal modulant. Il suffit ensuite de transformer ces signaux d'amplitude instantanée par des convertisseurs numériques analogiques (CNA) et de les injecter dans des mélangeurs pour produire le signal à émettre. Les mélangeurs reçoivent en quadrature le signal d'un oscillateur local. Les signaux produits par les mélangeurs sont ensuite mélangés dans un troisième mélangeur jouant par ailleurs le rôle d'amplificateur. L'amplificateur est relié à un aérien pour émettre le signal. Le filtrage analogique envisagé précédemment est montré sur la figure 5 par un filtre passe bande (à bande étroite) en tirets. Un tel filtre n'est bien entendu pas envisageable dans un modulateur multiporteuses, surtout si d'une trame t1 à l'autre t2 le dessin spectral change.

Pour obtenir une porteuse Fi programmable depuis un signal à une fréquence autour de zéro, il est nécessaire de provoquer un saut de fréquence par un additionneur. Il est connu d'intercaler cet additionneur entre la table de conversion et l'accumulateur de phase, pour superposer à chaque période d'échantillon, la fréquence de la porteuse programmée à la fréquence de modulation instantanée. Ceci est montré avec l'additionneur, sauteur, préconisant l'injection d'un signal à une fréquence F1 à F 64 entre le circuit de conversion et l'accumulateur de phases.

Pour effectuer cette addition, bien entendu, le taux de suréchantillonnage doit être plus grand que la fréquence maximum synthétisée de manière à éviter des repliements de spectres. Ici, la fréquence maximum synthétisée est 26 MHz. Cette fréquence maximum correspond à 64 bandes de 200 Khz (soit 12,8 MHz) multiplié par deux pour satisfaire au critère de Nyquist. On choisit dans ce cas un taux de suréchantillonnage de 4, menant à une fréquence de suréchantillonnage de 104 MHz. Du fait que la fréquence pourrait changer d'une trame à l'autre, comme cela a été montré sur la figure 2, il n'y a pas de moyen simple de prévoir, après synthèse, un filtre de canal. On doit obligatoirement remplacer le filtre analogique par un filtre numérique pour éliminer les composantes parasites engendrées par la modulation et qui se trouvent à l'extérieur de la bande des 200 KHz utiles.

Avec des filtres de type IIR, des problèmes de distorsion de phases et de dynamiques de calcul conduisent, avec des filtres à 20 coefficients, à devoir réaliser 104 MHz x 20 = 2.080 millions de multiplications accumulations complexes (MCMAC) par seconde. Avec des filtres de type FIR, il n'y a pas de problème de distorsion de phase mais la puissance de calcul requise est de 54.080 millions de multiplications accumulations réelles (MRMAC). Une opération CMAC est équivalente à quatre opérations RMAC.

La figure 5 montre encore avec des cadres en tirets que pour combiner plusieurs porteuses simultanément, il convient d'additionner les signaux produits par plusieurs circuits de modulation, avant de transformer le résultat de la combinaison dans un transformateur numérique analogique, et avant de moduler dans les mélangeurs en quadrature, le signal d'un oscillateur local par ces signaux additionnés. Evidemment, pour les huit porteuses, on devrait avoir huit circuits de modulation, tous suréchantillonnés à 104 MHz. Il y aurait alors aussi huit traitements de filtrage, ce qui conduirait dans ce dernier cas à 432.640 MRMAC. Ce type de filtrage est quasiment irréalisable aujourd'hui, car il serait très cher et consommerait beaucoup trop d'énergie. En effet, dans l'état de l'art, les processeurs de signaux numériques disponibles ne sont capables que d'effectuer 400 MMAC par unité, et consomment déjà 1 watt. Ce qui voudrait dire que la consommation pour les huit canaux serait de 1 kW.

Ce n'est pas du tout compétitif vis à vis d'une solution analogique même si une intégration particulièrement soignée pouvait permettre de gagner un gain de 4 à 10.

En outre, la réalisation d'éléments de calculs discrets conduirait à une perte d'efficacité, à une perte de puissance due aux nombreuses interfaces à haute vitesse d'entrée-sortie qu'il faudrait aménager entre les différents éléments de calculs. A fortiori, il n'est pas envisageable de pouvoir monter jusqu'à 32 ou 64 porteuses comme envisagé dans l'invention.

L'invention a donc pour objet de remédier à ces inconvénients en limitant le coût, et donc la quantité de matériel mis en oeuvre, ainsi que la puissance consommée par les différents circuits mis en oeuvre. Un des buts de l'invention est de rendre le modulateur multiporteuses intégrable et modulaire, par incorporation des filtres de canal dans le modulateur.

Le principe de l'invention est celui d'une tabulation exhaustive de toutes les trajectoires complexes possibles des signaux filtrés qui sont déductibles des combinaisons de bits ou de symboles introduits dans le modulateur.

L'invention est basée sur les observations suivantes : une modulation linéaire a un nombre fini d'états et de transitions (trajectoires possibles de signal durant une période de un bit : période de symbole). Un filtre FIR est aussi équivalent d'une machine d'état finie (on parle aussi d'automate ou de système séquentiel) dès que son temps de réponse est fini. Enfin, une combinaison ou bien une cascade ou une convolution de deux machines d'état finies, reste une machine d'état finie mais avec une complexité qui est le produit des deux complexités initiales.

Comme par ailleurs, la modulation d'entrée a aussi un nombre fini d'états et de transitions (pour une modulation en bits, il y a deux états et donc deux transitions possibles) la sortie d'un modulateur linéaire de type GMSK (Gaussian Minimum Shift Keying) filtré à posteriori par un filtre de type FIR, a un nombre fini d'états et de trajectoires correspondant à une période de bit.

De ce fait, une machine d'état, ou un automate, peut être réalisée. D'une manière générique, un tel automate est basé sur une table dont l'adresse de lecture est partiellement produite par les informations lues à une lecture précédente. En outre, pour chaque nouvel état ou nouveau symbole, il y a un unique signal de trajectoire.

Aussi, même si la table est très grande, il y a une solution complètement tabulée, c'est à dire sans opération de type MAC. Comme on le verra plus loin, le modulateur peut être réalisé en entier avec deux tables en cascade, une pour produire des états futurs à fin de période de bit/symbole, et une autre table, précalculée, dite table des trajectoires qui produit directement les signaux instantanés à émettre. La table des trajectoires alimente directement un convertisseur numérique analogique en relation avec les mélangeurs. Elle fournit des signaux complètement traités, c'est à dire incorporant la modulation, les sauts de fréquence, et le filtrage. Les tables de l'automate de l'invention sont nettement moins volumineuses que les tables envisagées précédemment du fait, justement, de la présence de l'automate.

Une autre particularité de l'invention se situe dans le fait que, pour pouvoir simplifier la production de la table précalculée, l'automate produit des états codés arbitraires à partir du bit du signal à transmettre. Ces états codés arbitraires sont ensuite attribués à des valeurs de signal instantané à émettre obtenues par calcul à partir du bit du signal à transmettre.

L'invention a donc pour objet un procédé de programmation de l'automate d'un modulateur, notamment pour réseau de téléphonie mobile avec station de base et téléphone mobile, ledit modulateur comportant au moins une entrée de signal, un circuit modulateur pour qu'un signal admis à cette entrée y module une porteuse, et un circuit d'émission pour diffuser cette porteuse radioélectriquement, ledit circuit modulateur comportant
- un automate pour produire un état codé arbitraire à partir de bits du signal admis à l'entrée et d'un état codé arbitraire précédent de cet automate, et
- une table précalculée pour transformer cet état codé arbitraire en un signal instantané qui est introduit dans le circuit d'émission,
et ledit procédé de programmation étant essentiellement caractérisé en ce que
- on simule l'évolution d'un modulateur idéal pour un type de modulation donnée et pour différentes configurations de bits du signal d'entrée et on produit, à titre de signaux de sortie du modulateur, des trajectoires,
- on affecte arbitrairement à ces configurations des références d'états de modulation et des références de trajectoires,
- on constitue un automate en affectant, dans une table, ces références à une adresse d'un enregistrement de cet automate, et en affectant, dans une autre table ces trajectoires à une adresse correspondant à ces références de trajectoires,
- un état arbitraire correspondant à une configuration précédente du signal d'entrée, modifiée par la valeur d'un bit du signal d'entrée.

Un autre objet de l'invention est un modulateur ainsi obtenu.

L'invention sera mieux comprise à la lecture de la description qui suit et à l'examen des figures qui l'accompagnent. Celles-ci ne sont données qu'à titre indicatif et nullement limitatif de l'invention. Les figures montrent :
Figures 1 à 5 : les figures déjà commentées relatives à l'état de la technique ;
Figure 6 : un circuit de modulation compris dans un circuit modulateur selon l'invention ;
Figure 7 : un exemple particulier du circuit modulateur de l'invention avec un seul circuit de modulation selon la figure 6 ;
Figure 8 : un algorithme utilisable pour produire la table des trajectoires et la table de l'automate ;
Figures 9 et 10 : l'allure des trajectoires de phases dans un exemple de modulation utilisée jusque là.

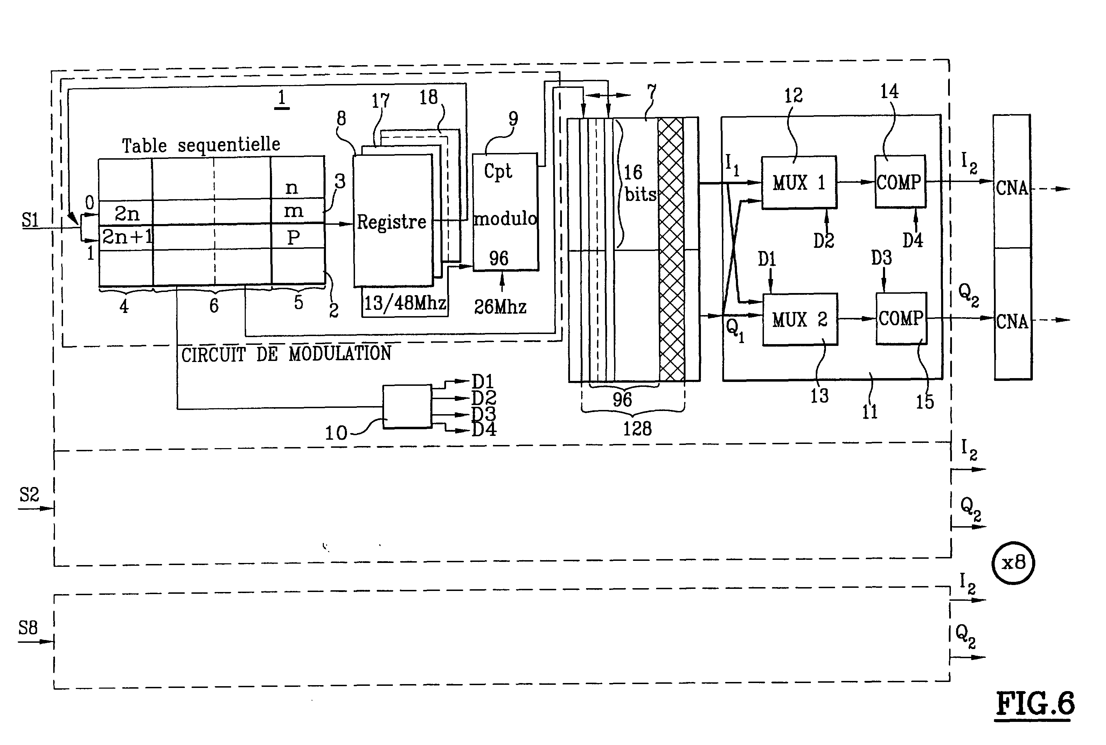

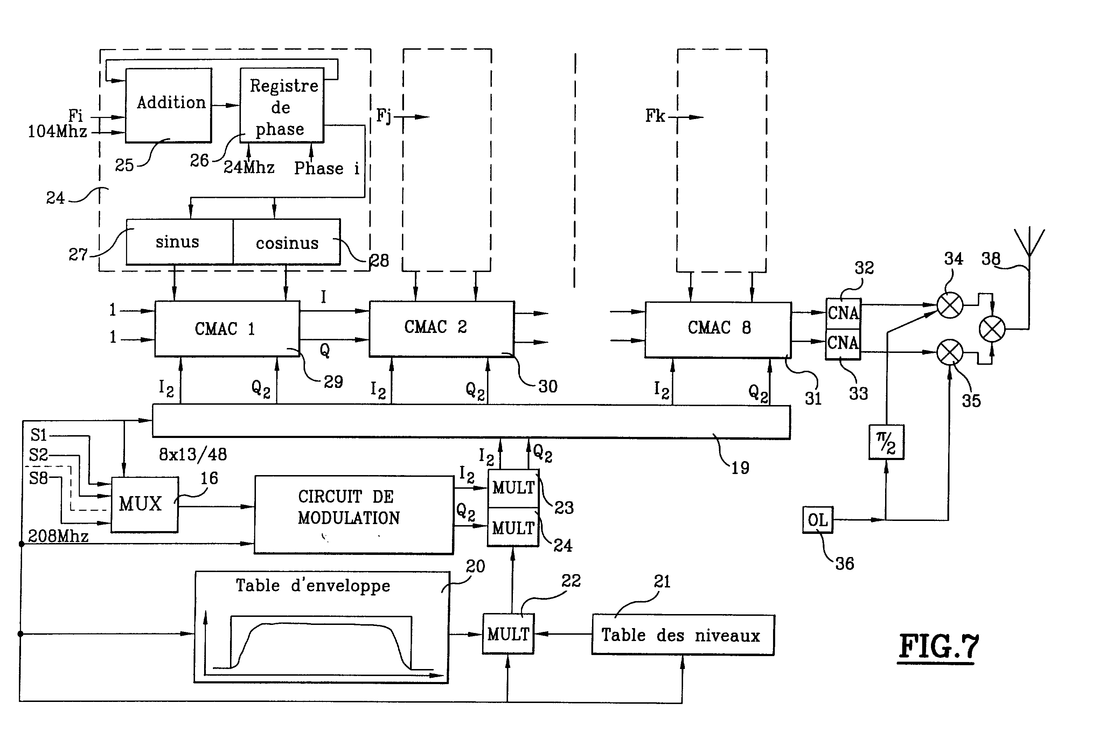

Dans le cadre d'une station de base, la figure 6 montre un circuit de modulation, comparable à celui de la figure 5, et utilisable dans un circuit modulateur selon l'invention. Ce circuit de modulation reçoit un signal, ici un signal S1, et le transmet sous une forme, I2 Q2 à un circuit d'émission. Le circuit d'émission combine, éventuellement, des porteuses différentes et les diffuse radioélectriquement. On verra à l'examen de la figure 7 comment cette combinaison peut être réalisée d'une manière préférée. Le circuit de modulation, et donc le circuit modulateur de l'invention, comportent essentiellement un automate 1 qui produit des états codés arbitraires à partir de bits d'un signal à transmettre (le signal S1) et d'un état codé arbitraire précédent délivré par cet automate. Le fait que les états mémorisés dans l'automate 1 soient des états arbitraires est lié, comme on le verra plus loin, à un mode de production d'une table de correspondance 2 utilisée dans l'automate 1.

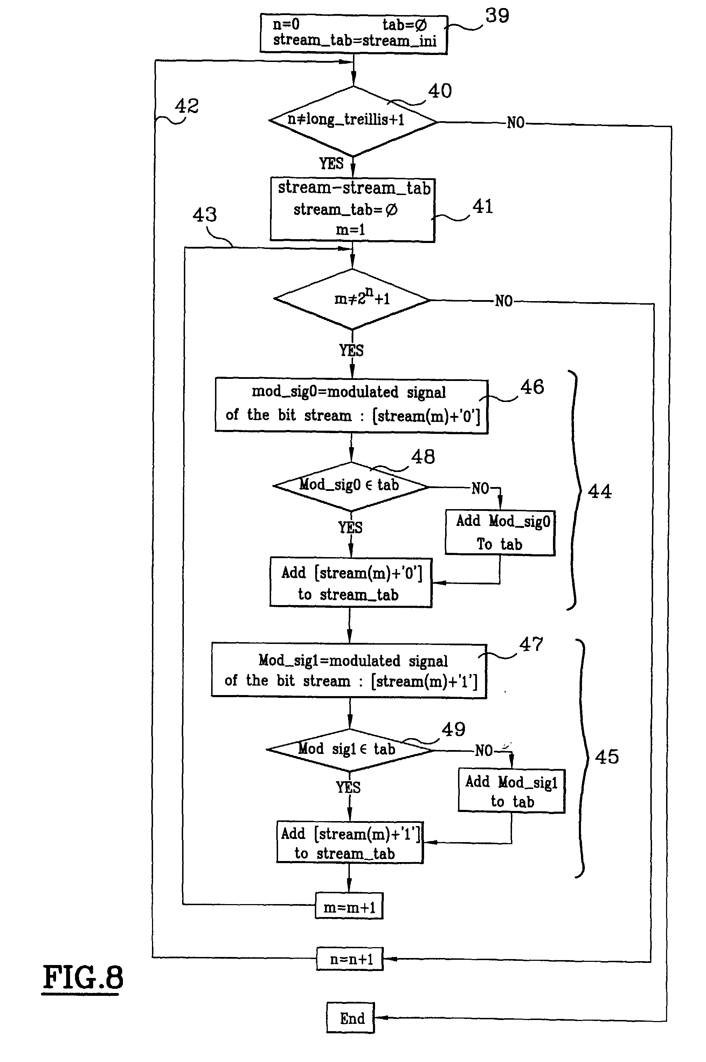

La table 2 comporte des enregistrements tels que 3. Chaque enregistrement est situé à une adresse 4 et comporte un certain nombre de bits d'informations. Dans un exemple, les champs enregistrés dans chaque enregistrement seront au nombre de deux. Un premier champ situé en zone 5 de la table 2 comportera des états. Un deuxième champ situé en zone 6 de la table 2 comportera des références de trajectoire. Le champ en zone 5 aura dans un exemple 9 bits et permettra ainsi de désigner 512 états différents. Les états seront des états arbitraires. Le caractère arbitraire des états sera, comme on le verra par la suite, imposé non par une quelconque relation aux valeurs des bits du signal S1 ou autre, mais tout simplement par la manière dont la table 2 aura été produite au moyen de l'algorithme représenté sur la figure 8. Aux états arbitraires enregistrés dans la colonne 5, on associe des références de trajectoire, arbitraires elles aussi et codées sur 9 bits. Les références de trajectoire arbitraires sont également des informations sans rapport avec la valeur des bits, mais seulement en rapport avec la manière dont on aura produit, comme on le verra plus loin, une table 7 de conversion précalculée.

Les références de trajectoire servent d'adresse d'accès aux trajectoires de la table précalculée 7. La table précalculée 7 permet de transformer une référence de trajectoire codée arbitraire, disponible en colonne 6, en un signal instantané I1 ou Q1, éventuellement 12 Q2, qui sera utilisé pour être introduit dans le circuit d'émission. Les enregistrements dans la table 7 comporteront de préférence deux mots. Dans un exemple les mots ont 16 bits chacun. Chaque enregistrement correspondra alors aux deux composantes en quadrature de l'amplitude instantanée. Le signal instantané ainsi constitué est introduit dans le circuit d'émission.

Le fonctionnement de l'automate est le suivant : à un moment donné, un état codé arbitraire n a été lu en colonne 5 de la table 2. Cet état a été préalablement stocké dans un registre intermédiaire 8. Cet état combiné ensuite avec la valeur du signal S1 (qui vaut 0 ou 1) permet d'adresser à nouveau la table 2, à une adresse 2n ou 2n+1 selon la valeur de S1. Autrement dit, à chaque valeur de n trouvée, il y a deux enregistrements candidats de la table 2, un de ces deux enregistrements est choisi, en fonction de la valeur de bit du signal S1.

Dans l'exemple, on a montré que la sélection de l'adresse 2n conduisait à un autre état codé arbitraire m (sans aucune relation avec n, du moins à priori), alors que la sélection de la ligne d'adresse 2n+1 entraînait la détection de l'état codé arbitraire p.

Dans une modulation de type GMSK, avec un horizon sur 3 périodes bits, on va être amené à devoir filtrer avec un filtre FIR les signaux instantanés produits. Ce filtre va avoir un effet de mémoire du passé équivalent à au moins 5 périodes bits. Ceci revient donc à mettre en cascade soit deux automates comme évoqués précédemment avec 3 et 5 périodes bits, soit un seul comme montré dans l'exemple. Ceci signifie que l'automate unique a alors un horizon de 8 périodes bits (une mémoire du passé sur 8 bits). En tenant compte du bit d'entrée du signal S1, on obtient 2⁸⁺¹= 512 trajectoires possibles. C'est la raison pour laquelle les états arbitraires et références de trajectoire arbitraires seront codés sur 9 bits. Ils renvoient à 512 situations différentes. La lecture de la table 2, et donc du registre 8, se produisent à un rythme égal à 13 / 48 MHz par voie : au rythme des bits du signal S1.

La figure 6 montre par ailleurs deux perfectionnements à l'invention.

Un premier perfectionnement concerne l'introduction d'un compteur 9, modulo 96. Le compteur 9 va permettre d'interpoler des trajectoires plus nombreuses que celles qui seraient données au rythme de 13 / 48 MHz. Dans ce but, le compteur 9 est cadencé par une fréquence 96 fois plus élevée que la fréquence bit du signal S1.

Autrement dit, le compteur 9 est remis à zéro à chaque lecture de bit du signal S1 et égrène 96 positions avant une prochaine lecture d'un bit du signal S1, sa prochaine mise à zéro. La table 7 comportera alors 512 x 96 positions d'adressage. Cependant, comme 96 n'est pas une puissance entière de 2, on préfère pour chaque trajectoire adressée par l'automate 1 réaliser des partitions de 128 adresses consécutives dans la table 7. Dans chaque partition, on neutralise 32 adresses. Les 32 adresses neutralisées sont montrées par la zone barrée. De ce fait, la table 7 comportera 512 x 128 enregistrements au lieu de 512 x 96 enregistrements utiles.

Aussi, à chaque trajectoire arbitraire lue en zone 6 de la table 2, on vient lire une première adresse de la table 7. Puis on lit, au rythme du compteur 9, 95 autres adresses successives avant de passer à une autre trajectoire arbitraire. Du fait de cette répartition en mémoire, pour une référence de trajectoire arbitraire n produite par la colonne 6, l'adresse effectivement rejointe dans la mémoire 7 sera 128.n + i (i valant de 0 à 95). Il suffit pour effectuer cette multiplication par 128 de décaler la valeur d'adresse de 9 crans vers les bits de poids forts d'adresse de manière à se mettre au début de la série des 96 positions utiles. Les signaux délivrés par le compteur 9 servent de poids faible de l'adresse des enregistrements dans la mémoire 7.

La figure 6 montre également un deuxième perfectionnement de l'invention. Dans celui-ci, on tient compte des symétries naturelles des signaux instantanés. En effet, les signaux instantanés sont des composantes circulaires, de rayon constant, repérées seulement par la phase. Il y a donc une symétrie, dite selon I et Q : une symétrie en sinus et cosinus autour de π/2, π, 3π/2, 2π. En outre, comme on le verra plus loin, il est possible de faire compter le compteur 9 dans un sens en comptant ou dans un autre en décomptant.

Ceci revient alors à n'enregistrer que huit fois moins d'informations dans la table 7. Celle-ci peut alors être huit fois moins volumineuse.

Pour simplifier le comptage dans une partition de suréchantillonnage, et pour tenir compte de la symétrie de comptage, plutôt que de compter de 1 à 96 et d'abandonner les positions 97 à 128 de la mémoire 7, on préférera que le compteur 9 soit centré sur 64. On le fait alors compter des valeurs de 16 à 111 ou décompter des valeurs de 111 à 16. De ce fait, il suffit de décaler la totalité de l'enregistrement de la mémoire 7, de 16 positions par rapport à l'adresse de départ.

Aussi, à partir de la référence de trajectoire arbitraire disponible en colonne 6 de la table 2, on va pouvoir produire d'une part une adresse réduite et d'autre part une information de symétrie. Cette information de symétrie va servir à modifier en 12 Q2 des valeurs I1 Q1 lues dans la table 7 à l'adresse réduite. L'information de symétrie est constituée par quatre signaux D1 à D4. Les signaux D1-D4 vont servir à commander un multiplexeur complexe 11 d'interprétation des signaux I1 Q1 instantanés lus dans la mémoire 7.

Le multiplexeur complexe 11 comporte deux multiplexeurs respectivement 12 et 13 recevant chacun les signaux I1 et Q1 sur chacune de leurs deux entrées (mais en position inversée d'un multiplexeur à l'autre). Les multiplexeurs 12 et 13 sont commandés par les signaux D1 et D2. Les multiplexeurs 12 et 13 sont reliés à des circuits respectivement 14 et 15 de complément à 2. Les circuits de complément à 2 14 et 15 reçoivent comme signaux de commande, les signaux D3 et D4. Le complément à 2 revient à délivrer en sortie l'inverse du signal I ou Q admis en entrée. Ceci peut en outre être simplifié par la suite en remplaçant le circuit de complément à 2 par un circuit de complément à 1 qui ne nécessite qu'un OU exclusif commandé au lieu d'un demi-additionneur.

Il reste avec cette technique, un inconvénient qui est une translation de 1 vers les bits de poids fort de la trajectoire, ce qui conduit à des parasites, à un multiple du temps de bits, à un niveau sensiblement égal à - 92 dBC. Ceci peut en outre, être évité par la réalisation d'une translation du codage, ou à l'arrondi de I et Q par la moitié du bit le moins significatif.

En agissant ainsi, la table 7 aura une taille 8 fois plus faible, ou à taille égale, permettra un horizon de filtres réalisés dans la fonction de filtrage qu'elle met en oeuvre avec trois temps de bits supplémentaires.

De ce fait, le filtrage sera de bien meilleure qualité.

Un bon filtrage de canal, permettant par exemple un espacement de 400 Khz, c'est à dire une réjection des parasites à -40 dB à 400 Khz, nécessite un filtrage, à posteriori, de type FIR avec 384 coefficients. Ceci correspond à une durée de mémoire du passé de 5 temps de bits. Dans ces conditions, avec 512 trajectoires imposées en colonne 6, la table 2 comportera 512 doubles mots de 9 bits, soit 9.216 bits pour définir l'état arbitraire et la trajectoire arbitraire. La table 7 pour sa part comportera 512x128 doubles mots de 16 bits soit 2 Mbits, puisque I et Q sont codés tous les deux sur 16 bits. Si on adopte la réduction de la taille de la mémoire par 8, on obtient une mémoire 7 de 256 Kbits, soit 32 Koctets, au lieu de 2 Mbits.

Pour simplifier l'explication, on pourrait admettre que le circuit de modulation représenté sur la figure 6 est réalisé huit fois pour produire huit séries de signaux I1 et Q1 (avant le multiplexeur 11, ou I2 Q2 après le multiplexeur 11). Sur la figure 7, néanmoins, on a montré selon un troisième perfectionnement, qu'il était préférable d'agir différemment.

Dans une station de base, le circuit de modulation est en fait alimenté par un signal provenant d'un multiplexeur 16. Le multiplexeur 16 reçoit les différents signaux S1 à S8 à transmettre aux mobiles, Dans la norme GSM, dans une fenêtre de 577 microsecondes, il y a 156,25 bits produits à la fréquence de modulation GSM qui est de 13/48 MHz. Il est possible alors de commander le multiplexeur 16 avec un signal de commande allant huit fois plus vite que la fréquence de modulation GSM. Si on le fait, le multiplexeur 16 scrutera cycliquement très rapidement chacune des huit entrées et délivrera en sortie pendant une même fenêtre temporelle, en 156 salves de 8 bits, tous les signaux émis dans les huit bandes de fréquence (F1, F4, F14...).

Dans ces conditions, l'automate 2 de la figure 6 devra être modifié. Notamment, le registre 8 va être dupliqué huit fois en registres 17, 18 de manière à pouvoir représenter à l'entrée d'adressage de la table 2, pour une salve suivante, les états arbitraires correspondants à chacune des voies considérées (F1 à F64). Comme autre modification, bien entendu, la vitesse de scrutation du registre 8 et autres registres 17 à 18 se fera à une fréquence huit fois plus élevée : 8 x 13 /48 MHz. Néanmoins, ceci permet de conserver la même table 2. En pratique, cette fréquence de 8x13/48 MHz sera synthétisée à partir d'un signal d'horloge à 208 MHz.

En outre, au lieu de faire travailler le compteur 9 à 26 MHz (c'est à dire 96 fois plus vite que la fréquence de modulation GSM), on va devoir le faire travailler lui aussi à une fréquence encore huit fois plus forte : à 208 MHz. Compte tenu qu'une telle fréquence est tout à fait acceptable dans le cadre actuel de la technologie, cette solution est préférée puisqu'elle permet de réaliser alors tout le modulateur en un seul équipement comme celui montré sur la figure 6, et non pas 8 comme celle-ci le suggérait.

En sortie, bien entendu, les signaux I2 et Q2 devront être introduits dans un multiplexeur 19 pour être séparés avant d'être mis en relation avec un modulateur général.

La figure 7 montre un exemple particulier de modulateur généralisé dans laquelle huit modulateurs sont montés en cascade. On aurait pu néanmoins retenir une autre architecture, notamment du type de celle représentée sur la figure 4. Dans le circuit de modulation de la figure 7, on a montré un signal de commande à 208 MHz. Ce signal de commande à 208 MHz commande aussi, bien entendu, le multiplexeur 19. Le signal de commande du multiplexeur 16 est déduit du signal de commande à 208 MHz. Ce signal de commande à 208 MHz commandera par ailleurs une table d'enveloppe 20 et une table des niveaux 21. Cette table d'enveloppe 20 et cette table des niveaux 21 ont pour fonction de réaliser des adaptations envisagées sur la figure 3. Autrement dit, le niveau auquel doit être émis un signal pour un usager donné (d'autant plus fort que l'usager est loin) sera multiplié par l'enveloppe temporelle qu'il convient de donner au temps de montée de ce signal dans la fenêtre temporelle. Ceci est réalisé par un multiplicateur 22. La table d'enveloppe 20 peut être la même, sollicitée pareillement huit fois de suite dans chaque salve pour la lecture du temps de montée instantané. La lecture de la table 20 est synchronisée avec le début et la fin des fenêtres temporelles. La table des niveaux 21 comporte huit niveaux, imposés par les éloignements des utilisateurs U1-U8. Elle est lue cycliquement au rythme de 208 MHz.

Les signaux I2 et Q2 sont ensuite multipliés, dans des multiplicateurs 23 et 24 respectivement, par le résultat du multiplicateur 22. De ce fait, on disposera de signaux I2 et Q2 réellement utilisables comme signaux instantanés. Ces signaux instantanés vont moduler des porteuses à fréquence Fi, Fj ou Fk, huit fréquences parmi les 64 de la manière décrite ci-après.

De préférence, on effectuera une seule conversion numérique analogique de la totalité du signal modulant, juste avant l'émission des signaux à émettre. Auparavant, tout le traitement continuera à être numérique. Dans ce but, on utilise comme oscillateur générateur de sous-porteuses des oscillateurs numériques commandés tel que l'oscillateur 24. Un tel oscillateur 24 comporte un additionneur 25 et un registre de phases 26 rebouclé sur une des entrées de l'additionneur 25. Une autre entrée de l'additionneur 25 reçoit un signal numérique représentatif d'une Fi fréquence donnée. Par la réinjection, de la même manière qu'avec l'accumulateur de phase de la figure 5, on produit une phase instantanée. Cette phase instantanée tourne d'autant plus vite que le signal Fi représente une fréquence plus élevée. Par exemple, la fréquence Fi pourra valoir de 0 à 26 MHz. Le choix de 26 MHz de suréchantillonnage pour le modulateur, et de 104 MHz pour la production des sous-porteuses, est lié à la volonté de disposer d'un multiple commun au taux de bit (13 / 48 MHz) et à l'espacement de canal (200 Khz).

Ceci conduit à une génération parfaitement synchronisée, sans erreur de phase, et avec un nombre limité d'états de phase. Dans un exemple, on aura 1040 états de phase (104 / 0,1 = 1.040). Les phases instantanées sont ensuite converties dans des tables sinus 27 et cosinus 28 en composante en quadrature de l'amplitude de la sous-porteuse programmée. Avec 1040 états de phase, ceci conduit à de petites tables trigonométriques. La seule erreur qui reste de ce mode de production de l'onde locale est constituée de parasites dans la bande des 104 MHz. Elle provient du bruit de quantification de l'amplitude. Ceci est estimé inférieur à -98 dBC pour des échantillons sur 16 bits. L'additionneur 25 est un additionneur de 11 bits.

Le registre de phases 26 comporte par ailleurs un soustracteur par 1.040 qui est activé chaque fois que l'additionneur dépasse cette valeur de 1.040. La phase initiale de l'oscillateur commandé numériquement est réglable pour la porteuse dans le registre avec une résolution de 2π / 1.040, c'est à dire sensiblement 0,35°. Du fait qu'on dispose, pour les signaux produits par le registre de phases 26 des symétries sinus et cosinus (I et Q respectivement), et du fait qu'on dispose d'une fréquence de 208 MHz, on réalise une seule table au lieu de deux tables 27 et 28. Pour la production du sinus, la table unique est adressée par la phase - π/2 c'est à dire - 1.040 /4.

Les signaux délivrés par les tables 27 et 28 ou la table unique lue deux fois plus vite sont introduits en commun avec les signaux 12 et Q2 précédents dans un circuit de multiplications complexes CMAC1 29. Ce circuit 29 de multiplications complexes produit donc deux signaux I et Q correspondant au signal à émettre. Les circuits CMAC effectuent ainsi une modulation produit.

Selon une variante particulièrement intéressante, dans l'invention, on a monté en cascade des circuits de modulation complexes CMAC 29, 30 et 31. Les entrées des multiplieurs CMAC sont les sorties du circuit de modulation et de l'oscillateur de l'étage considéré. Ce résultat de multiplication est additionné avec une troisième entrée de multiplieur, qui correspond à une sortie d'un multiplieur précédent, pour délivrer les signaux de sortie I et Q du multiplieur. Chaque circuit CMAC reçoit ainsi d'une part du multiplexeur 19 les signaux I2 Q2 correspondant à une voie de modulation. Il reçoit, d'autre part, les signaux sinus cosinus produits par les tables 27 et 28 de l'oscillateur commandé numériquement correspondant. Il reçoit enfin les signaux I et Q d'un circuit CMAC présent en amont. Le premier circuit CMAC en amont de tous reçoit 0 et 0 sur ces dernières entrées. Dans ces conditions, le dernier circuit CMAC 31 délivre les signaux à émettre.

Ces signaux à émettre sont alors convertis, enfin, par les convertisseurs analogiques numériques 32 et 33. Les signaux délivrés par les convertisseurs analogiques numériques, sont des signaux d'amplitude instantanée dont l'évolution est représentative de la modulation finale. Ces signaux sont appliqués à deux mélangeurs respectivement 34 et 35 en quadrature, recevant un signal délivré par un oscillateur local 36. Par exemple, si l'on est en GSM la fréquence de l'oscillateur local sera de l'ordre de 900 MHz. Si on est en DCS, elle sera de 1.800 MHz, si on est en PCM elle sera de 1.900 MHz. Les signaux délivrés par les deux mélangeurs 34 et 35 sont ensuite introduits dans un mélangeur 37 avant leur amplification éventuelle et leur diffusion sur un aérien 38.

Les éventuels filtrages et amplifications situés à partir des convertisseurs 32 et 33 jusqu'à l'émission, sont de type classique.

La figure 8 montre la manière de remplir les tables 2 et 7 de l'invention. Au cours d'une première étape 39, on impose que le rang n soit nul et que les tables soient vides. Compte tenu des indications données ci-avant, on sait que le nombre n doit être inférieur à la longueur du treillis + 1 (en pratique il doit être inférieur à 513). Au cours d'un test 40, on regarde si n est inférieur à 513. Selon le cas, on continue l'élaboration ou bien l'opération est terminée. Dans ces conditions, on fixe dans une étape 41 des valeurs de départ de variables stream, stream_tab, et m.

Le principe du programme de la figure 8 est de produire, après une synthèse et un filtrage par un moyen analytique de calcul, d'une part les noms, les références des nouveaux états arbitraires et des nouvelles trajectoires arbitraires partant de celles qui ont déjà préalablement été attribuées. Il est d'autre part de calculer les valeurs précalculées de la table 7. Une boucle extérieure 42 est ainsi parcourue N fois. N est la longueur du treillis nécessaire pour parcourir d'une manière complète tous les états et trajectoires possibles.

Une boucle interne 43 permet de calculer les 2p nouveaux états et références de trajectoire pour chaque nouvelle valeur de bit arrivant 0 ou 1. La boucle interne 43 comporte deux séquences 44 et 45 comparables et liées à l'état 0 ou 1 du bit arrivant. Pour chaque nouvel état (un état est un couple I et Q correspondant à un échantillon au début de la période de temps bit), on calcule, en une étape 46 ou 47, la trajectoire simulée. Puis une comparaison 48 ou 49 est faite avec tous les états déjà atteints depuis le début de la boucle externe 42. Si l'état est nouveau, alors il est ajouté à la table 2 de prédiction des états avec un code d'état arbitraire incrémenté de 1. Si l'état existe déjà, le réseau ne s'étend pas à la prochaine étape de la boucle interne. Pour chaque couple associant un état déjà connu et une nouvelle valeur de bit, correspond un nouveau code d'état arbitraire écrit dans la table. A la prochaine itération de la boucle externe, seulement les nouveaux états rencontrés seront enregistrés.

Dans la boucle interne, pour chaque extension du nombre des états, avec 0 ou 1, une trajectoire nouvelle est calculée. La trajectoire est comparée avec toutes les trajectoires déjà rencontrées depuis le début de la boucle externe. Ceci est effectué en prenant en considération les huit symétries possibles. Si une trajectoire est nouvelle, elle est ajoutée à la table des trajectoires comme une référence pour une nouvelle classe, avec un code de classe augmenté. Un code de symétrie (signaux D1-D4) est ajouté dans les champs de la table 2. Si la trajectoire existe déjà dans la table, le code correspondant est utilisé et le code de symétrie est calculé. Les deux sont aussi mis dans les champs 6 de la table de prédiction.

De manière à être capable de bénéficier des symétries, l'état original pour entrer dans la boucle externe doit être choisi sur un quadrant, par exemple, avec un passé de modulation correspondant à plus de bits. Une autre méthode, aveugle, est de provoquer une boucle initiale avec des générations de trajectoires et d'états suffisamment longues pour entrer dans un mode stable du filtre. Par exemple, on utilisera une séquence de 10 bits : 5 plus la longueur en temps de bits du filtre FIR.

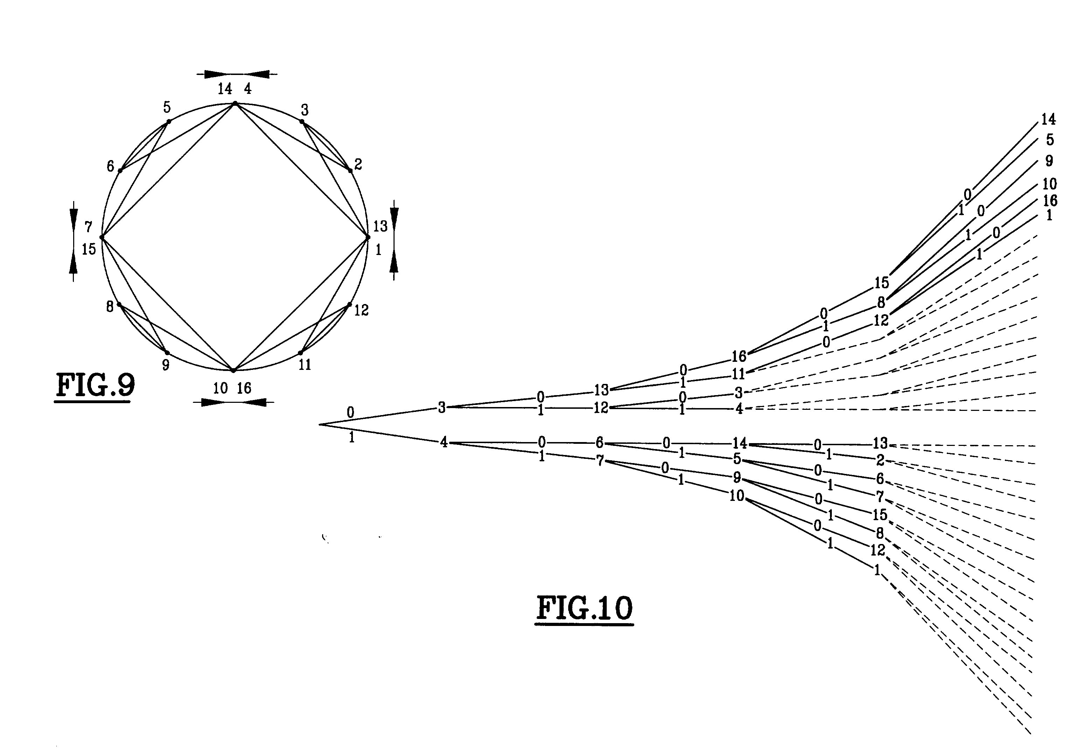

A titre d'exemple, la visualisation des états des transitions, où les symétries peuvent être constatées, et les extensions correspondantes du réseau effectuées dans le programme sont montrées respectivement dans les figures 9 et 10. Cet exemple s'applique au cas d'une modulation de type GMSK linéarisé sur 3 bits sans filtrage pour simplifier les dessins. Mais le principe est exactement le même avec plus d'états de modulation et un filtre long à posteriori (512 états au lieu de 16).

Le parcours de modulation est propre à une modulation retenue. Pour une modulation donnée, par exemple celle représentée sur la figure 9, partant d'un état donné, par exemple l'état arbitraire 1, on simule dans un programme de calcul la phase instantanée que devrait délivrer un circuit de modulation comme celui de la figure 5. Notamment on évalue les valeurs instantanées suréchantillonnées disponibles en sortie de l'accumulateur de phase. A ces valeurs instantanées, on fait subir, mathématiquement, un filtrage FIR avec un horizon de filtre choisi à l'avance. Le filtre choisi est un filtre avec lequel on estime être capable de respecter correctement les contraintes de filtrage de la norme dans laquelle on évolue. On notera que, s'agissant de calculs préparatoires, on peut choisir un filtre très précis. La seule contrainte qui pèse sur le choix de ce filtre est la longueur de son horizon temporel qui est directement lié au nombre de trajectoires qu'il faudra stocker en mémoire.

On obtient alors les valeurs instantanées filtrées qu'il y a lieu de stocker dans la mémoire 7 à une adresse correspondant à la référence de trajectoire arbitraire attribuée à l'état de départ. Puis on fait évoluer l'état de départ en simulant l'arrivée d'un nouveau bit à zéro, puis d'un nouveau bit à un. On obtient les deux états arbitraires 2 et 4 représentés figure 9. Pour ces deux états arbitraires, on calcule de la même façon les valeurs instantanées filtrées correspondantes. Ainsi de suite pour tous les états possibles. Les états possibles sont donnés par la modulation retenue. Dans un exemple simple montré sur la figure 9, les états sont représentés par une phase 0, π/6, 2π/6, π/2 etc...A chaque nouvel état, il est possible de savoir, ici simplement, si l'état est nouveau en regardant si la phase atteinte et la phase de départ ont déjà été rencontrées.

Les avantages de la solution de l'invention sont : l'intégrabilité et une meilleure utilisation de la technologie - la réduction du coût par huit puisqu'un seul modulateur sur huit va être réalisé - un gain d'un facteur bien supérieur à 100 du nombre des MRMAC comparé aux approches classiques - la modularité des modulateurs et des circuits de transpositions (un principe qui n'est pas limité en nombre de porteuses) - une généralisation possible à n'importe quelle modulation linéaire ou linéarisée, c'est à dire à un nombre fini d'états, et post-filtrée par un filtre à réponse impulsionnelle finie. La modulation peut être de phase, d'amplitude, de fréquence, à constellation ou toute combinaison donnant un nombre fini d'états lorsqu'ils sont échantillonnés à une fréquence bits. La mise en oeuvre est générale et ne dépend pas de la forme du filtre, elle ne dépend que de la longueur maximum du filtre. Par ailleurs, il n'y a aucune contrainte sur la longueur du filtre sauf la taille des mémoires.

De préférence les mémoire 2 et 7 sont du type RAM dynamique ou statique, ou mémoire non volatile programmable, par exemple du type EPROM ou EEPROM.

L'invention peut aussi être utilisée pour les mobiles. Pour ceux-ci elle permet une meilleure trajectoire de phase et une meilleure élimination des parasites dans les canaux adjacents. Ceci pourrait par exemple permettre, un espacement de 400 Khz dans les liaisons montantes, depuis les mobiles vers les stations de base.

## Revendications

1. Procédé de programmation de l'automate d'un modulateur, notamment pour réseau de téléphonie mobile avec station de base et téléphone mobile, ledit modulateur comportant au moins une entrée de signal (S1), un circuit modulateur pour qu'un signal admis à cette entrée y module une porteuse (Fi), et un circuit d'émission (38) pour diffuser cette porteuse radioélectriquement, ledit circuit modulateur comportant
- un automate (1) pour produire un état (5, 6) codé arbitraire à partir de bits du signal admis à l'entrée et d'un état (5) codé arbitraire précédent de cet automate, et
- une table (7) précalculée pour transformer cet état codé arbitraire en un signal instantané (I1, Q1,I2, Q2) qui est introduit dans le circuit d'émission,
et ledit procédé de programmation étant caractérisé en ce que
- on simule l'évolution d'un modulateur idéal pour un type de modulation donnée et pour différentes configurations de bits du signal d'entrée et on produit, à titre de signaux de sortie du modulateur, des trajectoires,
- on affecte arbitrairement à ces configurations des références d'états de modulation et des références de trajectoires,
- on constitue un automate en affectant, dans une table (2), ces références à une adresse (2n, 2n+1) d'un enregistrement de cet automate, et en affectant, dans une autre table (7) ces trajectoires à une adresse correspondant à ces références de trajectoires,
- un état arbitraire (m, p) correspondant à une configuration (n) précédente du signal d'entrée, modifiée par la valeur d'un bit du signal d'entrée.

2. Modulateur obtenu au moyen d'un procédé de programmation selon la revendication 1.

3. Modulateur selon la revendication 2, caractérisé en ce que le circuit modulateur comporte un compteur (9) de suréchantillonnage pour produire progressivement, au rythme de ce compteur, de multiples signaux instantanés par état codé arbitraire.

4. Modulateur selon la revendication 3, caractérisé en ce que la table précalculée comporte un nombre (128), multiple de 2ⁿ, d'adresses utilisables pour des signaux instantanés correspondant à un état codé arbitraire, alors que le compteur de suréchantillonnage ne produit pas un nombre (96), multiple de 2ⁿ, d'états différents.

5. Modulateur selon la revendication 2 à 4, caractérisé en ce que le circuit modulateur comporte un multiplexeur (11) pour modifier des signaux instantanés lus dans la table précalculée en fonction de bits (D1-D4) de l'état codé arbitraire.

6. Modulateur selon l'une des revendications 2 à 5, caractérisé en ce que l'automate comporte en entrée un multiplexeur (16) pour recevoir successivement plusieurs signaux d'entrée différents et un jeu de registres (8, 17, 18) pour mémoriser des états codés arbitraires précédents correspondant à chacun de ces signaux d'entrée différents et en ce que le circuit d'émission comporte plusieurs circuits (29-31) pour combiner des porteuses correspondant à chacun de ces signaux d'entrée.

7. Modulateur selon la revendication 6, caractérisé en ce que le circuit d'émission comporte un jeu de multiplicateurs (29-31) numériques complexes recevant comme premiers opérandes des signaux (27, 28) de porteuse délivrés par un jeu d'oscillateurs (Fi, Fj, Fk) commandés numériquement, comme deuxièmes opérandes les signaux instantanés (12, Q2) correspondant aux différents signaux d'entrée et produisant des signaux à émettre.

8. Modulateur selon les revendications 6 et 7, caractérisé en ce que le circuit modulateur comporte, en sortie, un multiplexeur (19) connecté aux entrées de deuxième opérande des multiplicateurs numériques complexes.

9. Modulateur selon l'une des revendications 7 ou 8, caractérisé en ce que les multiplicateurs numériques complexes sont en cascade, à trois opérandes, et reçoivent comme troisième opérande le résultat d'un multiplicateur numérique complexe en cascade précèdent.

10. Modulateur selon la revendication 9, caractérisé en ce que les multiplicateurs numériques complexes sont reliés à des convertisseurs (32, 33) numériques analogiques eux-mêmes reliés à un circuit de diffusion.

11. Modulateur selon l'une des revendications 2 à 10, caractérisé en ce que la table précalculée correspond à une modulation linéaire ou linéarisée, c'est à dire à nombre fini d'états, et post-filtrée par un filtre à réponse impulsionnelle finie.

12. Modulateur selon la revendication 11, caractérisé en ce que la modulation est reprogrammable, les tables étant du type RAM, EPROM ou EEPROM.
